# EUROPEAN PATENT APPLICATION

(11) **EP 1 282 292 A2**
(43) Date of publication of application: **05.02.2003**
(21) Application number: 02255257.4
(22) Date of filing: 26.07.2002
(51) Int. Cl.: H04M 1/73

(54) **Mobile Communication Terminal**

(30) Priority: 30.07.2001 JP 2001228872
(71) Applicant: Kabushiki Kaisha Toshiba, Tokyo (JP)
(72) Inventor: Wagai, Kiyoshi, c/o Intellectual Property Division, Minato-ku, Tokyo 105-8001 (JP)
(74) Representative: Brookes Batchellor

(57) **Abstract**

A mobile communication terminal has a liquid crystal display (60) containing a first display mode in which information is displayed using a predetermined number of colors and a second display mode in which information is displayed using a smaller number of colors than in the first display mode. The mobile communication terminal further has a recognition means (40) for recognizing whether the caller and the person called are connected. The mobile communication terminal further has a setting means (40, 62) for setting the liquid crystal display (60) in the second display mode, if the recognition means (40) recognizes that the caller and the person called are connected.

## Description

The present invention relates to a mobile communication terminal capable of setting power save control for a liquid crystal display.

It is now being attempted to use, as the display for a mobile communication terminal, TFT (Thin Film Transistor) liquid crystal in place of STN (Super Twisted Nematic) liquid crystal. TFT liquid crystal can provide a clearer display at a higher response rate than STN liquid crystal, and is therefore free from persistence of an image on the display composed of TFT liquid crystal even if the TFT liquid crystal is used for reproduction of a moving picture or display of a game in which images are switched at high speed.

However, against the high speed response, TFT liquid crystal consumes more power than STN liquid crystal. Accordingly, the battery of the mobile communication terminal using TFT liquid crystal quickly loses the electrical charge of the battery.

As described above, in the conventional mobile communication terminal, if a TFT liquid crystal display is used, the TFT liquid crystal consumes more power than an STN liquid crystal display, thereby shortening the life of the battery.

It is an object of the invention to provide a mobile communication terminal capable of suppressing the power consumption of the liquid crystal display employed therein.

To attain the object, according to a first aspect of the invention, there is provided a mobile communication terminal, by which a caller and a person called are connected to each other over a channel used for communication between the mobile communication terminal and a base station, comprising:
a liquid crystal display containing a first display mode in which information is displayed using a predetermined number of colors and a second display mode in which information is displayed using a smaller number of colors than in the first display mode;
a recognition part configured to recognize whether the caller and the person called are connected; and
a setting part configured to set the liquid crystal display in the second display mode, if the recognition part recognizes that the caller and the person called are connected.

According to a second aspect of the invention, there is provided a mobile communication terminal set in an idle state in which the terminal waits an incoming call signal transmitted from a base station over a control channel, comprising:
a liquid crystal display containing a first display mode in which information is displayed using a predetermined number of colors and a second display mode in which information is displayed using a smaller number of colors than in the first display mode;
a recognition part configured to recognize whether the terminal has been set in the idle state; and
a setting part configured to set the liquid crystal display in the second display mode, if no operation is executed until a first period of time elapses after the recognition part has recognized that the terminal has been set in the idle state.

According to a third aspect of the invention, there is provided a mobile communication terminal, by which a caller and a person called are connected to each other over a channel used for communication between the mobile communication terminal and a base station, comprising:
a liquid crystal display containing a first display mode in which information is displayed and a second display mode in which information is displayed with smaller power consumption than in the first display mode;
a recognition part configured to recognize whether the caller and the person called are connected; and
a setting part configured to set the liquid crystal display in the second display mode, if the recognition part recognizes that the caller and the person called are connected.

According to a fourth aspect of the invention, there is provided a mobile communication terminal set in an idle state in which the terminal waits an incoming call signal transmitted from a base station over a control channel, comprising:
a liquid crystal display containing a first display mode in which information is displayed and a second display mode in which information is displayed with smaller power consumption than in the first display mode;
a recognition part configured to recognize whether the terminal has been set in the idle state; and
a setting part configured to set the liquid crystal display in the second display mode, if no operation is executed until a first period of time elapses after the recognition part has recognized that the terminal has been set in the idle state.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram illustrating a mobile communication terminal according to an embodiment of the invention;
FIG. 2 is a block diagram illustrating the configuration of an LCD unit employed in the mobile communication terminal of the embodiment;
FIG. 3 is a flowchart useful in explaining the display mode control executed when the mobile communication terminal of the embodiment is in an idle state in which the mobile communication terminal is waiting for an incoming call signal transmitted from a base station over a control channel; and
FIG. 4 is a flowchart useful in explaining the display mode control executed when the mobile communication terminal of the embodiment is in a state in which a caller and a person called are connected.

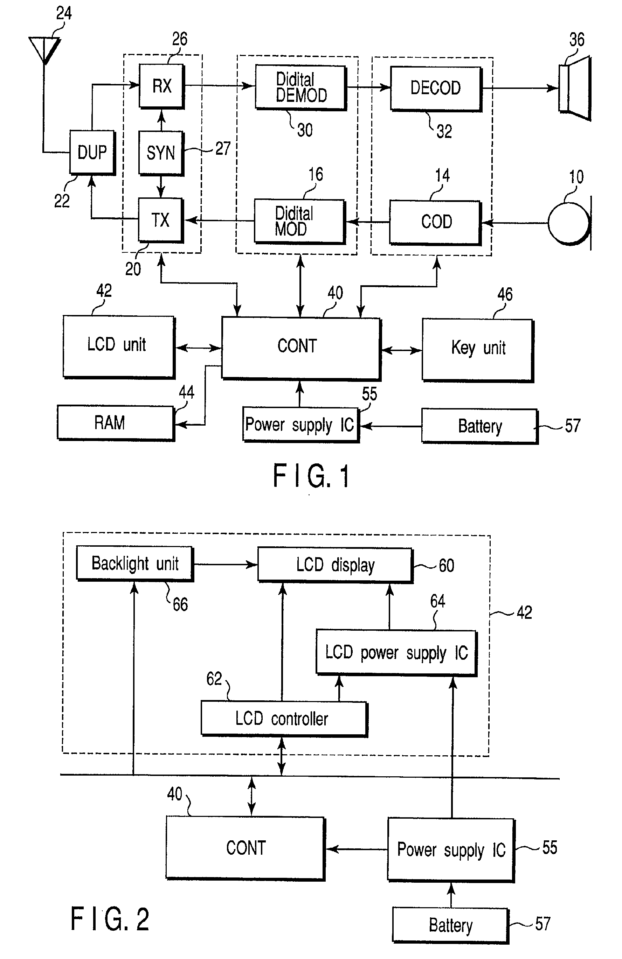

A mobile communication terminal according to an embodiment of the invention will be described with reference to the accompanying drawings. FIG. 1 is a block diagram illustrating the mobile communication terminal of the embodiment. In FIG. 1, the transmission audio signal output from a microphone 10 is digitized and compressed by an encoder 14.

The compressed signal is digitally modulated by a digital modulation unit 16. The modulated signal is converted into a high frequency signal by a radio transmitter 20, using a local signal from a synthesizer 27. The high frequency signal is then amplified to a predetermined power level. The amplified signal is supplied only to an antenna 24 via an antenna duplexer 22. From the antenna 24, the signal is transmitted as a high-frequency radio signal to a base station (not shown).

On the other hand, a high-frequency radio signal transmitted from the base station and received by the antenna 24 is output only to a radio receiving unit 26 via the antenna duplexer 22. The radio receiving unit 26 amplifies the received signal, and converts the received signal into a baseband signal, using a local signal from the synthesizer 27. The converted signal is digitally demodulated by a digital demodulator 30.

The demodulated signal is decoded and decompressed by a decoder 32. The decoded and decompressed signal is then converted into an analog signal. The analog signal is output from a loudspeaker 36.

A controller 40 is connected to an LCD (Liquid Crystal Display) unit 42, a RAM (Random Access Memory) 44, and a key unit 46 as an input operation unit. The LCD unit 42 and the key unit 46 are used to execute an input or a display operation for a voice call, and also to input characters. The RAM 44 stores information related to telephone numbers and received electronic mails, etc.

A power supply IC 55 connected to a battery 57 controls a battery voltage, and supplies the controlled voltage to the controller 40 and other sections.

The LCD unit 42 has the configuration as shown in FIG. 2. FIG. 2 is a block diagram illustrating the configuration of the LCD unit 42.

The LCD unit 42, which is controlled by the controller 40, comprises a liquid crystal display (hereinafter referred to as an "LCD display") 60, and LCD controller 62 for controlling the LCD display 60.

The LCD display 60 has a mode for displaying information using 4096 colors (hereinafter referred to as a "4096-color mode"), and a mode for displaying information using 8 colors (hereinafter referred to as an "8 color-mode"). The LCD controller 62 serves to set one of these color modes in accordance with an instruction from the controller 40.

Further, information is not displayed on the entire screen of the LCD display 60 but on a predetermined area of the LCD display 60. For example, information is displayed only on the upper area that is a third of the entire screen. The display of information on a particular area of the LCD display 60 can suppress the power consumption of the LCD display 60, as compared to the display of information on the entire screen of the LCD display 60.

The LCD unit 42 further comprises an LCD power supply IC 64 for controlling the power voltage supplied to the LCD display 60, and backlight unit 66 for illuminating the LCD display 60. The power to the LCD controller 62, LCD power supply IC 64 and backlight unit 66 is supplied by a power supply IC 55. The power supply IC 55 controls the voltage output from the battery 57 and supplies the controlled voltage to those units, i.e. the controller 40 and the LCD power supply IC 64.

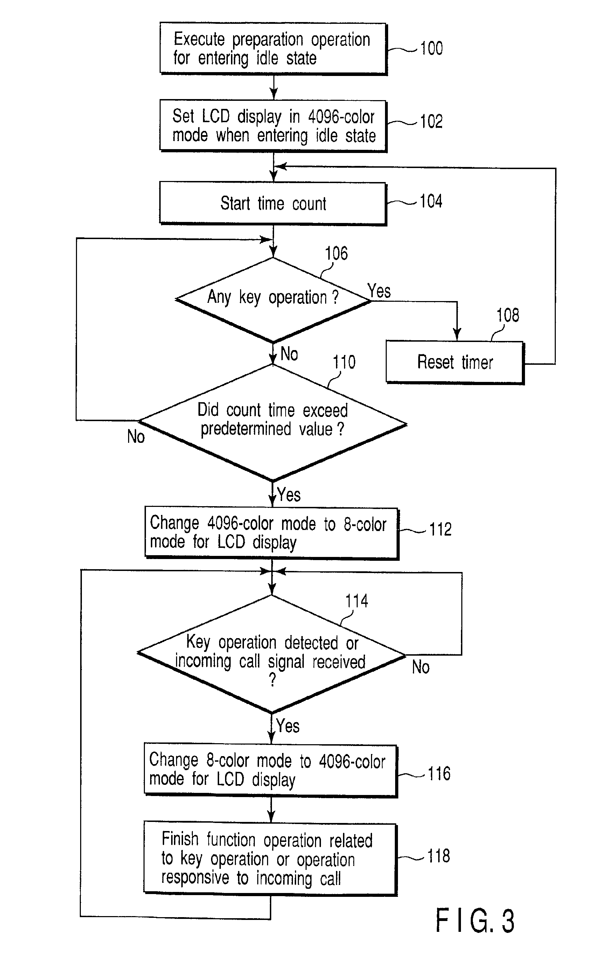

Referring then to FIG. 3, an operation of the mobile communication terminal employed in the embodiment will be described. FIG. 3 is a flowchart useful in explaining the display mode control executed when the mobile communication terminal of the embodiment is waiting for an incoming call signal transmitted from a base station over a control channel (this state in which a mobile communication terminal is waiting for an incoming call signal transmitted from a base station over a control channel will hereinafter be referred to as an "idle state").

More specifically, a description will be given of the control executed by the LCD unit 42 when the above-described mobile communication terminal has been shifted to the idle state (step 102) after the mobile communication terminal has executed a preparation operation for entering the idle state (step 100).

Until the mobile communication terminal enters the idle state, the LCD display 60 is set in the 4096-color mode. Upon recognizing that the mobile communication terminal has entered the idle state, the controller 40 starts time counting using a timer (step 104). Upon detecting a key operation before the timer count value reaches a predetermined value (step 106), the controller 40 resets the timer (step 108), and resumes time counting (step 104).

Before the counted time has reached a predetermined period of time, for example, three minutes (step 110), the LCD display 60 is maintained in the 4096-color mode (step 106). If the controller 40 detects that the counted time has reached three minutes (step 110), the controller 40 changes the mode of the LCD display 60 from the 4096-color mode to the 8-color mode (step 112).

This control suppresses the power consumption of the mobile communication terminal that is in the idle state. The 8-color mode is not suitable for the display of a color image, but is sufficient to display the reception of an electronic mail, or to display setting information of an answering machine function, manner mode, etc.

If the controller 40 detects, after the shift to the 8-color mode, a key operation executed by a user, such as an operation of receiving an electronic mail, or the reception of an incoming call signal (step 114), the controller 40 changes the display color mode from the 8-color mode to the 4096-color mode (step 116). If the controller 40 detects, after the shift to the 4096-color mode, that the function operation related to the key operation has finished or an operation responsive to the incoming call has been executed (step 118), the controller 40 changes the mode of the LCD display 60 from the 4096-color mode to the 8-color mode and returns the program to the step 114, thereby monitoring a further key operation or incoming call.

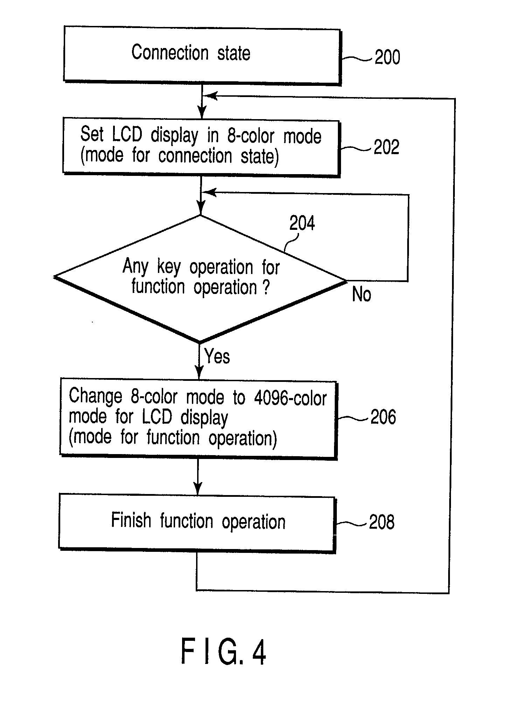

Referring to FIG. 4, a description will be given of the LCD display mode control executed when a caller and a person called are connected to each other over a channel used for communication between the base station and the mobile communication terminal (the state in which a caller and a person called are connected will hereinafter be referred to as a "connection state"). FIG. 4 is a flowchart useful in explaining the display mode control executed when the mobile communication terminal of the embodiment is in the connection state.

If the controller 40 recognizes that the mobile communication terminal is in the connection state (step 200), the controller 40 forcibly sets the 8-color mode for the LCD display 60 (step 202). This is because during the connection state, the user hardly sees the LCD display 60, and hence almost no problem will occur even if the LCD display color mode is set to the 8-color mode in the connection state.

If the controller 40 detects, after the LCD display color mode is set to the 8-color mode, an operation for viewing an updated web screen stored in a cache memory in the RAM 44 or any other function operation (step 204), the controller 40 changes the LCD display color mode from the 8-color mode to the 4096-color mode (step 206). Unless the controller 40 detects any operation, the controller 40 maintains the 8-color mode (step 202).

If the controller 40 detects, after setting the LCD display color mode to the 4096-color mode, that the function operation has finished (step 208), the controller 40 returns the program to the step 202, thereby setting the LCD display 60 in the 8-color mode.

As described above, the mobile communication terminal of the invention incorporates a liquid crystal display having a first display mode for displaying information and a second display mode for displaying information with smaller power consumption than the first display mode. If the mobile communication terminal enters a state in which a caller and a person called are connected or if a predetermined time period elapses without any operation after the mobile communication terminal has entered the state, the liquid crystal display is set in the second display mode. By virtue of this structure, the power consumption of the liquid crystal display can be suppressed.

## Claims

1. A mobile communication terminal, by which a caller and a person called are connected to each other over a channel used for communication between the mobile communication terminal and a base station, **characterized by** comprising:
a liquid crystal display (60) containing a first display mode in which information is displayed using a predetermined number of colors and a second display mode in which information is displayed using a smaller number of colors than in the first display mode;
recognition means (40) for recognizing whether the caller and the person called are connected; and
setting means (40, 62) for setting the liquid crystal display (60) in the second display mode, if the recognition means (40) recognizes that the caller and the person called are connected.

2. The mobile communication terminal according to claim 1, **characterized in that** the setting means (40, 62) changes the second display mode to the first display mode for the liquid crystal display (60), if the recognition means (40) recognizes that a function operation has been executed after the setting means (40, 62) has set the liquid crystal display (60) in the second display mode.

3. The mobile communication terminal according to claim 1, **characterized in that** the liquid crystal display (60) is a TFT liquid crystal display.

4. A mobile communication terminal set in an idle state in which the terminal waits an incoming call signal transmitted from a base station over a control channel, **characterized by** comprising:
a liquid crystal display (60) containing a first display mode in which information is displayed using a predetermined number of colors and a second display mode in which information is displayed using a smaller number of colors than the first display mode;
recognition means (40) for recognizing whether the terminal has been set in the idle state; and
setting means (40, 62) for setting the liquid crystal display (60) in the second display mode, if no operation is executed until a first period of time elapses after the recognition means (40) has recognized that the terminal has been set in the idle state.

5. The mobile communication terminal according to claim 4, **characterized in that** the setting means (40, 62) changes the second display mode to the first display mode for the liquid crystal display (60), if the recognition means (40) recognizes that a function operation has been executed after the setting means (40, 62) has set the liquid crystal display (60) in the second display mode.

6. The mobile communication terminal according to claim 4, **characterized in that** the setting means (40, 62) changes the second display mode to the first display mode for the liquid crystal display (60), if the recognition means (40) recognizes that the incoming call signal has been received after the setting means (40, 62) has set the liquid crystal display (60) in the second display mode.

7. The mobile communication terminal according to claim 4, **characterized in that** the liquid crystal display (60) is a TFT liquid crystal display.

8. A mobile communication terminal, by which a caller and a person called are connected to each other over a channel used for communication between the mobile communication terminal and a base station, **characterized by** comprising:
a liquid crystal display (60) containing a first display mode in which information is displayed and a second display mode in which information is displayed with smaller power consumption than in the first display mode;
recognition means (40) for recognizing whether the caller and the person called are connected; and
setting means (40, 62) for setting the liquid crystal display (60) in the second display mode, if the recognition means (40) recognizes that the caller and the person called are connected.

9. The mobile communication terminal according to claim 8, **characterized in that** the setting means (40, 62) changes the second display mode to the first display mode for the liquid crystal display (60), if the recognition means (40) recognizes that a function operation has been executed after the setting means (40, 62) has set the liquid crystal display (60) in the second display mode.

10. The mobile communication terminal according to claim 8, **characterized in that** the liquid crystal display (60) is a TFT liquid crystal display.

11. A mobile communication terminal set in an idle state in which the terminal waits an incoming call signal transmitted from a base station over a control channel, **characterized by** comprising:
a liquid crystal display (60) containing a first display mode in which information is displayed and a second display mode in which information is displayed with smaller power consumption than in the first display mode;
recognition means (40) for recognizing whether the terminal has been set in the idle state; and
setting means (40, 62) for setting the liquid crystal display (60) in the second display mode, if no operation is executed until a first period of time elapses after the recognition means (40) has recognized that the terminal has been set in the idle state.

12. The mobile communication terminal according to claim 11, **characterized in that** the setting means (40, 62) changes the second display mode to the first display mode for the liquid crystal display (60), if the recognition means (40) recognizes that a function operation has been executed after the setting means (40, 62) has set the liquid crystal display (60) in the second display mode.

13. The mobile communication terminal according to claim 11, **characterized in that** the setting means (40, 62) changes the second display mode to the first display mode for the liquid crystal display (60), if the recognition means (40) recognizes that the incoming call signal has been received after the setting means (40, 62) has set the liquid crystal display (60) in the second display mode.

14. The mobile communication terminal according to claim 11, **characterized in that** the liquid crystal display means (60) is a TFT liquid crystal display.
